# FASCICULE DE BREVET EUROPEEN

(11) **EP 3 351 090 B1**
(45) Date de publication et mention de la délivrance du brevet: **25.03.2020**
(21) Numéro de dépôt: 18152418.2
(22) Date de dépôt: 18.01.2018
(51) Int. Cl.: A01G 9/02

(54) **CONTENANT SOUPLE POUR CULTURES**
FLEXIBLER BEHÄLTER FÜR KULTUREN
FLEXIBLE CONTAINER FOR CROPS

(30) Priorité: 19.01.2017 FR 1750449
(43) Date de publication de la demande: 25.07.2018
(73) Titulaire: Bacsac, 75005 Paris (FR)
(72) Inventeur: DE VIRIEU, Godefroy, 75014 Paris (FR)
(74) Mandataire: Lavialle, Bruno François Stéphane

(56) Documents cités:
- EP-A1- 2 976 938
- FR-A1- 2 946 498
- KR-A- 20140 147 511
- KR-U- 20120 004 774
- NL-A- 8 603 205
- US-A1- 2012 204 486
- US-A1- 2016 014 975

## Description

### ARRIERE PLAN DE L'INVENTION

La présente invention concerne un contenant souple pour cultures, notamment pour les cultures en ligne.

### OBJET DE L'INVENTION

De plus en plus de citadins souhaitent faire entrer la nature et les plantes dans leur proche environnement et sont en demande de véritables jardins urbains d'agrément ou même de structures d'agriculture urbaine sur leur balcon, terrasse ou toit-terrasse.

La création de véritables jardins ou structures agricoles sur des balcons, des terrasses ou des toits-terrasses impose aux architectes-paysagistes de disposer de contenants modulables et adaptables à tout type d'espace, esthétiques, peu coûteux et de plus en plus légers afin de privilégier les plantes et leur substrat à leurs contenants.

Bien qu'il existe une offre importante sur le marché de contenants de plantes (pots ou bacs) de dimensions, de couleurs et de matériaux différents, ces contenants sont souvent volumineux, parfois lourds à transporter et manipuler, ils sont peu modulables si ce n'est en ajoutant ou supprimant des contenants.

Bien qu'il existe également sur le marché des sacs souples faisant office de contenants, tels que ceux décrits dans KR 2014 0147511 A ou FR 2 946 498 A1, ce qui résout partiellement les problématiques de volume et de poids, le nombre de contenants doit être préalablement prévus et aucune modularité n'est possible une fois sur le lieu de l'installation.

### OBJET DE L'INVENTION

L'invention a pour but de fournir aux professionnels une solution pour réaliser sur le lieu de l'installation du jardin des contenants pour culture qui soient faciles à transporter, à manipuler, complètement modulables et adaptables aux dimensions souhaitées ou imposées par les dimensions du lieu d'installation, légers, résistants dans le temps et aux conditions météorologiques, et peu coûteux à fabriquer et à installer.

### RESUME DE L'INVENTION

A cet effet, l'invention a pour objet un contenant selon la revendication 1 comprenant une bande souple avec une partie centrale et deux bordures latérales, et au moins deux raidisseurs agencés dans la largeur de la bande de sorte qu'au moins une des extrémités de chacun desdits raidisseurs s'étende sur la bordure associée, et au moins un dispositif de liaison de deux extrémités de raidisseurs agencées sur des bordures opposées, le dispositif de liaison maintenant ainsi relevées les deux extrémités de sorte que la partie centrale de la bande forme le fond du contenant et que les bordures de la bande forment les parois latérales dudit contenant.

L'invention a également pour objet une bande souple selon la revendication 9 pour ledit contenant, la bande souple étant conformée en rouleau.

Selon un mode préférentiel, un contenant peut être constitué d'au moins deux bandes contigües associées par un dispositif d'association selon l'une de leur dimension (largeur ou longueur).

L'invention concerne également un procédé de montage selon la revendication 11 du contenant souple dans lequel on coupe la bande à la longueur voulue, on lie avec un dispositif de liaison les extrémités des raidisseurs positionnées en regard l'une de l'autre sur chacune des bordures opposées de sorte à former les parois latérales du contenant et on ferme le contenant à ses deux extrémités.

Selon un premier mode de mise en œuvre de l'invention, le dispositif de liaison relie deux extrémités de deux raidisseurs distincts, agencées sur les bordures opposées.

Selon un deuxième mode de mise en œuvre de l'invention, le dispositif de liaison relie les deux extrémités d'un seul raidisseur, agencées sur les bordures opposées.

D'autres caractéristiques et avantages de l'invention ressortiront à la lecture de la description détaillée qui suit, de deux modes de mise en œuvre particuliers non limitatifs de l'invention.

### BREVE DESCRIPTION DES DESSINS

La description détaillée fera référence aux figures des dessins annexés, parmi lesquelles :
- la figure 1 est une vue schématique en perspective d'un rouleau de bande souple pour contenant selon l'invention ;
- la figure 2 est une vue schématique en perspective d'un rouleau partiellement déroulé de bande souple pour contenant et des raidisseurs, conformes au premier mode de réalisation de l'invention ;
- la figure 3 est une vue schématique en perspective d'un contenant en cours de montage comprenant une bande souple, des raidisseurs et des dispositifs de liaison conformes au premier mode de réalisation de l'invention ;
- la figure 4 est une vue schématique en perspective d'un contenant selon l'invention une fois monté ;
- la figure 5 est une vue schématique en perspective d'un contenant en cours de montage comprenant une bande souple, des raidisseurs et des dispositifs de liaison conformes au deuxième mode de réalisation de l'invention.
- la figure 6 est une vue schématique en perspective d'un contenant en cours de montage comprenant deux bandes souples associées dans leur largeur par un dispositif d'association, des raidisseurs conformes au premier mode de réalisation de l'invention.
- la figure 7 est une vue schématique en perspective d'un contenant en cours de montage comprenant deux bandes souples associées dans leur largeur par un dispositif d'association, en l'espèce des raidisseurs reliés entre eux, utilisant les fourreaux, des raidisseurs conforme au premier mode de réalisation de l'invention.
- la figure 8 est une vue schématique en perspective d'un contenant en cours de montage comprenant deux bandes souples associées dans leur largeur par un dispositif d'association, en l'espèce un raidisseur en forme de U, utilisant les fourreaux, des raidisseurs conformes au deuxième mode de réalisation de l'invention.

### DESCRIPTION DETAILLEE DE L'INVENTION

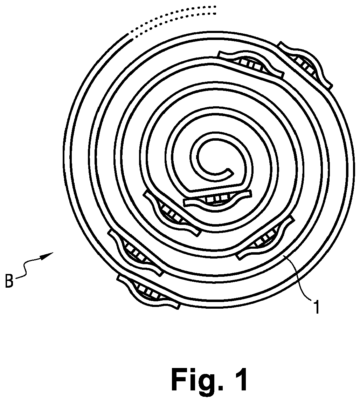

En référence aux figures 1 à 4, 6 et 7 et selon un premier mode de mise en œuvre, l'invention concerne un contenant (A) comprenant :
une bande (1) souple comprenant une partie centrale (1c) et deux bordures latérales (1a et 1b),
au moins deux raidisseurs (2a, 2b) agencés dans la largeur de la bande de sorte qu'au moins une des extrémité (3a, 3b) de chacun desdits raidisseurs s'étende sur la bordure associée (1a ou 1b),
au moins un dispositif de liaison (4) de deux extrémités de raidisseurs (3a, 3b) agencées sur des bordures opposées (1a, 1b), le dispositif de liaison maintenant ainsi relevées les deux extrémités de sorte que la partie centrale (1c) de la bande forme le fond du contenant et que les bordures de la bande (1a, 1b) forment les parois latérales dudit contenant.

Le contenant est fermé à ses extrémités.

Plus précisément, la figure 1 représente un rouleau (B) de bande souple (1) du contenant.

La bande souple peut être réalisée en tout matériau suffisamment souple pour être conformé et suffisamment résistant pour ne pas se déchirer sous la pression du substrat ou se désagréger sous l'effet des rayonnements solaires, de l'humidité ou du gel. A titre d'exemple, l'homme du métier pourra utiliser un géotextile.

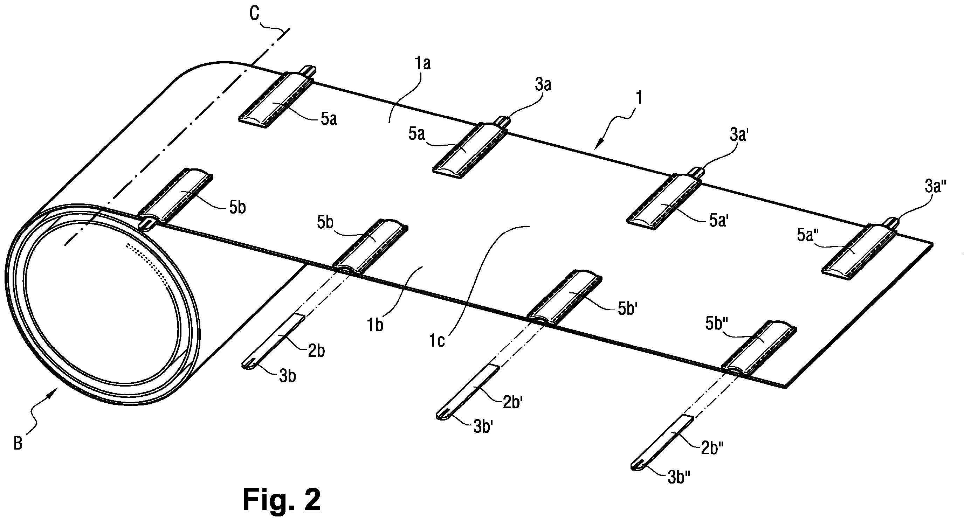

La figure 2 présente un rouleau (B) de bande souple (1) comprenant une partie centrale (1c) et deux bordures latérales (1a et 1b) et des raidisseurs (2a, 2b) agencés dans la largeur de la bande de sorte qu'au moins une des extrémités de chacun desdits raidisseurs (3a, 3b) s'étende sur la bordure associée (1a ou 1b).

Lors de la réalisation du contenant, on découpe une partie de la bande transversalement selon une ligne de coupe (C) telle qu'illustrée par la ligne en traits-points, la portion de bande ainsi découpée sera utilisée pour former le contenant (A).

L'utilisateur déterminera la position de la ligne de coupe (C) en fonction la longueur de la bande (1) nécessaire à la réalisation du contenant selon la longueur du contenant qu'il souhaite réaliser. Dans le rouleau B, il peut ainsi découper plusieurs bandes de longueurs identiques ou différentes. Il peut aussi couper une seule bande qu'il découpera à nouveau de sorte à réaliser dans cette bande plusieurs contenants.

L'homme du métier saura déterminer la largeur de la bande (1) selon les dimensions définitives souhaitées du contenant ainsi que la longueur totale de celle-ci, que la bande (1) soit conformée en rouleau ou non.

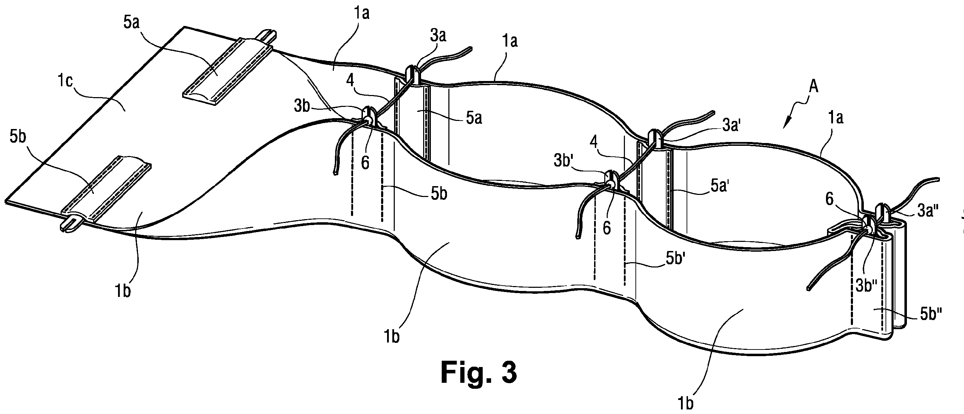

La figure 3 présente une bande (1) souple comprenant :
- une partie centrale (1c) et deux bordures latérales (1a et 1b),
- au moins deux raidisseurs (2a, 2b) agencés dans la largeur de la bande de sorte qu'au moins une des extrémités (3a, 3b) de chacun desdits raidisseurs s'étende sur la bordure associée,
- au moins un dispositif de liaison (4) de deux extrémités de raidisseurs (3a, 3b) agencées sur des bordures opposées (1a, 1b), le dispositif de liaison (4) maintenant ainsi relevées les deux extrémités (3a, 3b) de sorte que la partie centrale (1c) de la bande forme le fond du contenant et que les bordures de la bande (1a, 1b) forment les parois latérales dudit contenant (A).

Conformément au premier mode de mise en œuvre de l'invention représentée à la figure 3, les raidisseurs sont amovibles. Les raidisseurs (2a, 2b, 2a', 2b'), ici des tiges plates sont engagés dans des fourreaux (5a, 5b, 5a', 5b') ménagés sur la bande à intervalles réguliers dans le prolongement l'un de l'autre et ouverts sur les bordures opposées (1a, 1b) de la bande.

Les raidisseurs peuvent être réalisés en tout matériau imputrescible, ce peut-être à titre d'exemple du métal ou du plastique.

Le contenant conforme à ce premier mode de réalisation de l'invention comprend au moins quatre raidisseurs 2a, 2b, 2a', 2b' engagés respectivement dans les fourreaux (5a, 5b, 5a', 5b') ménagés à cet effet et en regard deux à deux. Ainsi, le raidisseur 2a est engagé dans le fourreau 5a, le raidisseur 2b en regard sur la bordure opposée de la bande dans le fourreau 5b, le raidisseur 2a' dans le fourreau 5a' positionné parallèlement au raidisseur 2a engagé dans le fourreau 5a, le raidisseur 2b' en regard sur la bordure opposée de la bande dans le fourreau 5b' positionnés parallèlement au raidisseur 2b engagé dans le fourreau 5b, et ainsi de suite.

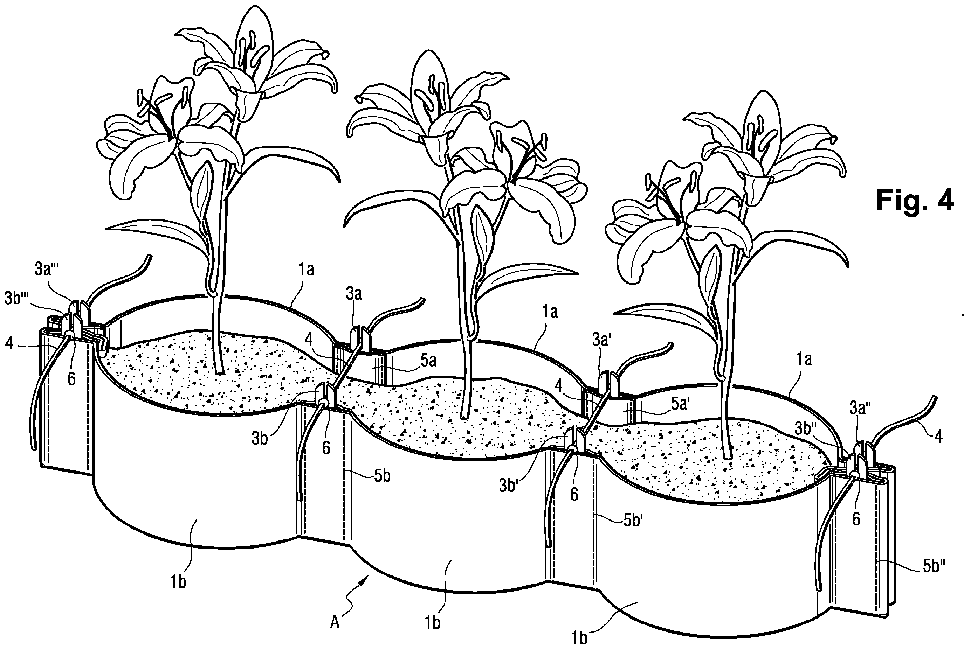

L'homme du métier saura déterminer la longueur de bande nécessaire et donc le nombre de raidisseurs agencés sur les bordures opposées nécessaires à la réalisation du contenant. Ainsi, à titre d'exemple et tel que représenté en figure 4, un contenant (A) conforme à l'invention peut être réalisé à partir d'une bande comprenant huit raidisseurs (2a, 2b, 2a', 2b', 2a", 2b", 2a''', 2b'''), les raidisseurs 2a, 2a', 2a'', 2a''' agencée sur la bordure (la) étant en regard des raidisseurs 2b, 2b', 2b", 2b''' agencées sur la bordure opposée (1b).

L'homme du métier saura déterminer l'intervalle entre deux raidisseurs de sorte à obtenir un contenant dont les parois sont suffisamment résistantes à la pression du substrat et des plantes du contenant, à titre d'exemple, les raidisseurs peuvent être espacés de 30 cm.

L'homme du métier saura déterminer la largeur et la longueur des fourreaux destinés à recevoir les raidisseurs ainsi que la façon de les réaliser. A titre d'exemple, les fourreaux peuvent être cousus ou thermocollés et avoir une longueur inférieure à celle des raidisseurs, le raidisseur venant alors en butée au fond du fourreau.

Les raidisseurs sont placés transversalement aux bordures de la bande. Selon ce mode privilégié de l'invention, « transversalement aux bordures » signifie perpendiculairement aux bordures (1a, 1b).

Dans une variante de ce mode de mise en œuvre, les fourreaux peuvent être ménagés (cousus ou thermocollés) traversant sur toute la largeur de la bande, formant ainsi un seul manchon ouvert à ses deux extrémités sur les bordures de la bande.

Les fourreaux ménagés sur les bordures de la bande peuvent non seulement accueillir les raidisseurs mais également des accessoires de culture tels que de façon non limitative des porte-étiquettes, des tuteurs ou des supports pour des voiles d'hivernage ou de forçage. Bien entendu, l'utilisateur pourra glisser dans les fourreaux tout type d'accessoires.

Chaque raidisseur est engagé dans un fourreau de telle manière que l'extrémité (3a ou 3b) s'étende sur les bordures de la bande. L'extrémité est agencée de telle manière qu'elle coopère avec les dispositifs de liaison (4). Selon le premier mode de mise en œuvre de l'invention telle que particulièrement illustrée sur la figure 3, au moins une des extrémités (3a ou 3b) du raidisseur est en forme de fourche. Ici, les extrémités (3a ou 3b) du raidisseur en forme de fourche destinées à coopérer avec le dispositif de liaison dépassent des bordures.

Un dispositif de liaison (4) relie deux extrémités (3a, 3b ; 3a', 3b' ; 3a", 3b") de deux raidisseurs distincts (respectivement 2a, 2b ; 2a', 2b' ; 2a", 2b"), agencées sur les bordures latérales opposées (1a, 1b). Ainsi, un premier dispositif de liaison relie l'extrémité 3a du raidisseur 2a à l'extrémité 3b du raidisseur 2b, un deuxième dispositif de liaison relie l'extrémité 3a' du raidisseur 2a' à l'extrémité 3b' du raidisseur 2b', et ainsi de suite. Les dispositifs de liaison (4) ainsi positionnés permettent de consolider le contenant et de maintenir les parois latérales en position relevées quelle que soit la pression exercée par le contenu (substrat et plantes).

La longueur du dispositif de liaison (4) détermine la largeur d'ouverture au sommet du contenant.

Ici, le dispositif de liaison est une cordelette sur laquelle sont disposés des points d'arrêt (6). La cordelette peut être en toute matière résistante à la tension et aux effets des rayonnements UV, à titre d'exemple, elle peut être en nylon ou en polyamide. La cordelette est pourvue de points d'arrêt fixes ou amovibles (6) destinés à permettre que la cordelette soit retenue par les extrémités (3a, 3b) des raidisseurs une fois le contenant monté. A titre d'exemple, les points d'arrêt peuvent être de simples nœuds réalisés lors du montage du contenant ou des billes plastiques surmoulées disposées à intervalles réguliers. L'homme du métier saura placer les cordelettes et les points d'arrêt entre deux extrémités de deux raidisseurs distincts agencées sur les bordures latérales opposées de telle sorte que lesdites cordelettes soient tendues.

Les dispositifs de liaison permettent non seulement de maintenir en position les extrémités de raidisseur pour former les parois du contenant mais peuvent également permettre à l'utilisateur de moduler la largeur d'ouverture du contenant en fonction de ce qu'il souhaite. En particulier, la largeur du sommet du contenant peut être modulée selon les végétaux présents et/ou selon les conditions météorologiques pour, par exemple, éviter l'évaporation ou le gel ou pour protéger des jeunes plantes.

Le contenant est fini et prêt à l'emploi lorsqu'on ferme les deux extrémités.

Selon le premier mode de mise en œuvre de l'invention telle qu'illustré par la figure 4, le contenant (A) est fermé à au moins une de ses extrémités par au moins un dispositif de liaison (4) de deux extrémités (3a", 3b") de raidisseur agencées sur des bordures opposées (1a, 1b), le dispositif de liaison (4) étant agencé de telle sorte que les extrémités des raidisseurs soient bord à bord d'une part et que, à cet endroit, la bordure (1a) jouxte la bordure (1b) d'autre part pour fermer ainsi l'extrémité du contenant.

L'homme du métier saura agencer la bande à l'extrémité du contenant de sorte à améliorer l'étanchéité. A titre d'exemple, il peut rabattre le surplus de bande à l'intérieur limitant ainsi au maximum la possibilité de perte de substrat par cette voie.

La présente invention concerne également un procédé de montage d'un contenant souple (A) tel qu'illustré dans les figures 2 à 4 dans lequel on coupe la bande (1) à la longueur voulue selon une ligne de coupe (C), on lie avec un dispositif de liaison (4) les extrémités des raidisseurs positionnées en regard l'une de l'autre sur chacune des bordures opposées (1a, 1b) de sorte à former les parois latérales du contenant (A) et on ferme le contenant à ses deux extrémités.

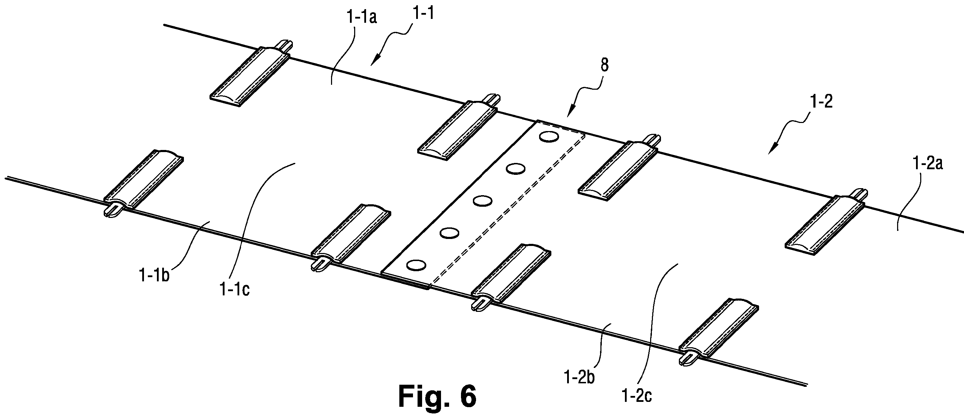

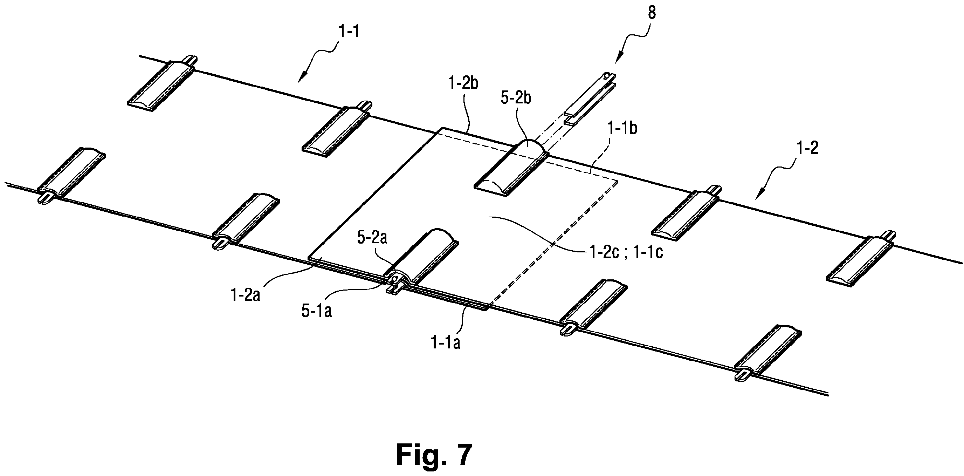

Selon une variante de l'invention illustrée par les figures 6 et 7, le contenant souple peut être constitué par au moins deux bandes (1-1) et (1-2) associées par un dispositif d'association (8). Une bande est associée à une autre bande par superposition partielle des deux bandes sur l'un au moins de leur même côté, les parties (1a, 1b et 1c) des deux bandes étant superposées. L'homme du métier saura définir sur quelle largeur les bandes sont superposées de telle sorte que le contenant ainsi formé soit solide et évite la perte du substrat, de manière préférentielle, les bandes sont superposées sur une largeur d'au moins 5 cm, de préférence au moins 10cm. A titre d'exemple selon les figures 6 et 7, la bande (1-1) et la bande (1-2) sont associées par superposition partielle des deux bandes sur toute leur largeur, c'est-à-dire transversalement aux bordures (1a et 1b) de chacune des bandes, de sorte à obtenir un contenant souple plus long. Bien entendu, les bandes peuvent-être également associées selon toute leur longueur, c'est-à-dire sur une de leur bordure (1a ou 1b) de sorte à réaliser un contenant dont le fond est plus large.

L'homme du métier saura déterminer quel dispositif d'association utilisé de sorte à solidariser une bande à au moins une autre. Le dispositif d'association doit être réalisé de telle sorte que les parois (ou le fond, si l'association se fait sur la longueur de la bande) du contenant souple une fois monté, conservent leur solidité et évitent la perte de substrat. A titre d'exemple, le dispositif d'association peut être constitué par des boutons pressions ou des agrafes, disposés sur la totalité de la longueur ou de la largeur des bandes destinées à être associées, tel qu'illustré dans la figure 6.

De manière préférentielle et telle qu'illustrée par la figure 7, une bande peut-être associée à au moins une autre bande en superposant au moins un fourreau d'une première bande (5-1a, 5-1b -non représenté sur la figure 7) à au moins un fourreau de la bande à associer (5-2a, 5-2b) et en insérant dans chacun desdits fourreaux un raidisseur, les deux raidisseurs étant ensuite liés par un dispositif de liaison de sorte à ce que les deux raidisseurs soient solidarisés et les bordures (1-1a et 1-2a ; 1-1b et 1-2b) soient respectivement superposées.

Selon une variante, les bandes peuvent être associées grâce à un raidisseur en forme de U dont une branche du U est insérée dans le fourreau (5-1a) de la première bande (1-1) et dont l'autre branche du U est insérée dans le fourreau (5-2a) de la bande (1-2) à associer. Le raidisseur en forme de U joue ici le rôle d'une pince. Comme précédemment indiqué, l'homme du métier saura déterminer sur quelle largeur les bandes sont superposées de telle sorte que le contenant souple une fois monté, conserve sa solidité et évite les pertes de substrat.

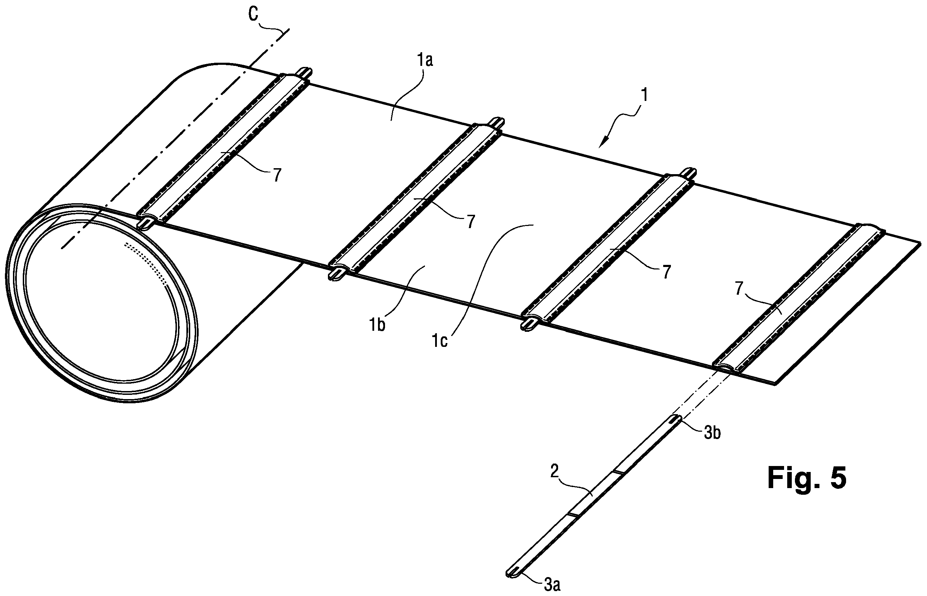

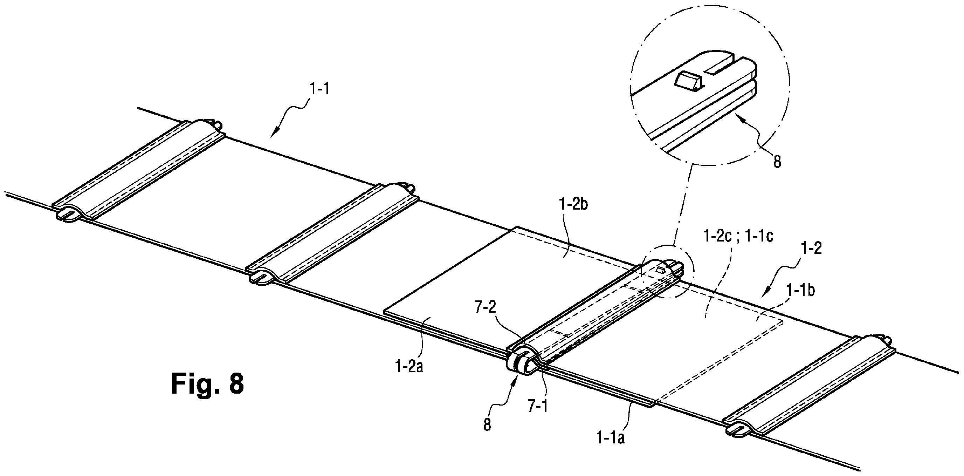

Un deuxième mode privilégié de mise en œuvre de l'invention est illustré par les figures 5 et 8. Ce deuxième mode de mise en œuvre est similaire au premier mode de mise en œuvre de l'invention à l'exception des raidisseurs. En effet, dans ce deuxième mode de mise en œuvre, le dispositif de liaison relie les deux extrémités d'un seul et même raidisseur (2), agencées sur les bordures opposées (1a, 1b). Ainsi, chaque raidisseur est engagé dans le fourreau, ici un manchon, (7) agencé transversalement aux bordures sur toute la largeur de la bande d'une bordure opposée à l'autre. Les deux extrémités du manchon (7) sont ouvertes sur les bordures opposées (1a, 1b) de la bande, lesdites ouvertures permettent à l'utilisateur d'engager le raidisseur dans le manchon de telle sorte que les deux extrémités du raidisseur s'étendent sur les bordures opposées de la bande. L'homme du métier saura déterminer la longueur du raidisseur ainsi que le matériau qui doit allier souplesse pour suivre les parois et le fond du contenant et robustesse pour produire l'effet attendu c'est-à-dire le maintien des parois. En particulier, l'homme du métier prévoira par exemple dans la partie centrale du raidisseur une zone de faiblesse ou des charnières pour permettre à la partie centrale qui se situe dans le fond du contenant d'être plane. Selon ce deuxième mode privilégié de mise en œuvre, chaque extrémité (3) du raidisseur (2) dépasse des bordures opposées de la bande et a une forme de fourche. Les dispositifs de liaison (4) sont positionnés comme décrit précédemment de sorte à relier les deux extrémités d'un seul et même raidisseur (2), agencées sur les bordures opposées.

Les dispositifs de liaisons sont identiques à ceux utilisés dans le premier mode de mise en œuvre de l'invention. Le contenant est fermé de la même façon.

Comme précédemment mentionné, le manchon peut accueillir des accessoires de culture.

Comme précédemment décrit et illustré par la figure 8, le contenant souple peut être constitué par au moins deux bandes (1-1) et (1-2) associées par un dispositif d'association (8). Le dispositif d'association utilisé est tel que précédemment décrit. Selon ce deuxième mode de réalisation de l'invention, le dispositif d'association peut également être constitué par un raidisseur en forme de U dont les extrémités des deux branches peuvent être, de manière optionnelle, fermées. Dans ce cas, la première branche du U est engagée dans le manchon (7-1) de la première bande et la seconde branche du U est engagée dans le manchon (7-2) de la bande à associer, le manchon de la première bande étant superposé au manchon de la seconde bande. Les extrémités des branches du raidisseur en forme de U dépassent des bordures des bandes. Le raidisseur en forme de U est ainsi positionné de telle sorte qu'il joue le rôle de pince, le fond du U permet l'association de la bordure 1-1a avec la bordure 1-2a tandis que les extrémités des deux branches du U, peuvent-être réunies par un dispositif de fermeture et permettent alors l'association des deux bordures opposées (1-1b et 1-2b). Le dispositif de fermeture du raidisseur en forme de U peut à titre d'exemple être un système de goupille ou d'encastrement d'une partie mâle ménagée à l'extrémité d'une des branches du U avec une partie femelle ménagée sur l'extrémité de l'autre branche du U. Ainsi, les bordures 1-1a, 1-2a, 1-1 b et 1-2 b et les parties centrales 1-1c et 1-2 c de chacune des bandes sont maintenues superposées par le raidisseur en forme de U fermé par l'extrémité de ses deux branches.

Ainsi, le contenant selon l'invention fournit aux professionnels une solution pour réaliser sur le lieu de l'installation du jardin des contenants pour culture qui sont faciles à transporter, à manipuler, complètement adaptables aux dimensions souhaitées et peu coûteux.

Bien entendu, l'invention n'est pas limitée aux deux modes de mise en œuvre qui viennent d'être décrits mais englobe également toutes les variantes entrant dans le cadre de l'invention telle que définie par les revendications.

En particulier, bien que les raidisseurs soient amovibles dans les deux modes de mise en œuvre décrits, ils peuvent être intégrés dans la bande. Ainsi, l'utilisateur n'aura pas à engager les raidisseurs dans les fourreaux mais n'aura qu'à lier leurs extrémités opposées par les dispositifs de liaison. Les raidisseurs peuvent être des tiges plates ou rondes préalablement intégrées à la bande mais peuvent également être réalisés en créant directement un renfort, par exemple par surépaisseur du matériau dans lequel est réalisée la bande.

Bien que les raidisseurs décrits dans les deux modes de mises en œuvre de l'invention soient disposés perpendiculairement aux bordures de la bande, ils pourraient ne pas l'être.

De manière préférentielle, les raidisseurs sont agencés de sorte à être parallèles entre eux, mais ils peuvent ne pas l'être.

Bien que les extrémités des raidisseurs aient été décrites dans les deux modes de mise en œuvre comme ayant une forme de fourche, les extrémités des raidisseurs coopérant avec les dispositifs de liaison peuvent prendre toute forme permettant le positionnement des dispositifs de liaison pour maintenir relevées les parois du contenant et assurer la solidité dudit contenant. A titre d'exemples non limitatifs, les extrémités des raidisseurs peuvent ainsi avoir une forme de crochet, être trouées, etc.

Bien que les deux modes de mise en œuvre de l'invention prévoient que les extrémités des raidisseurs dépassent des bordures, il est possible que les extrémités des raidisseurs soient intégrées dans les bordures de la bande, par exemple sous forme d'œillets ou de passants.

Bien que les deux modes de mise en œuvre de l'invention prévoient que les dispositifs de liaisons soient des cordelettes avec points d'arrêt, ce peut également être de manière non limitative des sangles, des fils métalliques ou armés, etc. L'homme du métier saura ainsi choisir le couple « dispositif de liaison » / «extrémités de raidisseur » le plus adapté. Ce peut par exemple et de manière non limitative être un système crochet/œillet, sangle/passant, bouton/boutonnière, etc.

Bien que le contenant soit fermé à ses extrémités par un dispositif de liaison de deux extrémités de raidisseurs agencées sur des bordures opposées, le dispositif de liaison étant agencé de telle sorte que les extrémités des raidisseurs soient bord à bord. Le contenant peut être fermé à ses extrémités en liant les deux bordures entre elles bord à bord. A titre d'exemples non limitatifs, le contenant peut avoir au moins une de ses extrémités fermées par collage, soudure, couture, agrafage, ou tout autre moyen permettant de fermer le contenant.

Bien que le contenant fini ait une forme de ligne, il peut prendre la forme de sinusoïde ou de cercle en liant les deux extrémités du contenant ou de carré ou de rectangle en pliant le contenant.

## Revendications

1. Contenant (A) pour cultures comprenant :
une bande (1) souple comprenant une partie centrale (1c) et deux bordures latérales (1a et 1b),
au moins deux raidisseurs (2a, 2b) agencés dans la largeur de la bande de sorte qu'au moins une des extrémités (3a ou 3b) de chacun desdits raidisseurs s'étende sur la bordure associée,
au moins un dispositif de liaison (4) de deux extrémités de raidisseurs agencées sur des bordures opposées, le dispositif de liaison maintenant ainsi relevées les deux extrémités de sorte que la partie centrale de la bande (1c) forme le fond du contenant et que les bordures de la bande (1a et 1b) forment les parois latérales dudit contenant.

2. Contenant (A) pour cultures selon la revendication 1 ledit contenant étant fermé à au moins une de ses extrémités par au moins un dispositif de liaison de deux extrémités de raidisseurs agencées sur des bordures opposées, le dispositif de liaison étant agencé de telle sorte que les extrémités des raidisseurs soient bord à bord.

3. Contenant pour cultures selon les revendications 1 ou 2 dans lequel les raidisseurs sont amovibles.

4. Contenant pour cultures selon la revendication 3 dans lequel les raidisseurs sont engagés dans des fourreaux (5) ménagés transversalement aux bordures dans la largeur de la bande.

5. Contenant pour cultures selon l'une quelconque des revendications 1 à 4 dans lequel le dispositif de liaison relie deux extrémités de deux raidisseurs distincts.

6. Contenant pour cultures selon l'une quelconque des revendications 1 à 5 dans lequel au moins une des extrémités de raidisseur est conformée en fourche.

7. Contenant pour cultures selon l'une quelconque des revendications 1 à 6 dans lequel le dispositif de liaison est une cordelette à points d'arrêt.

8. Contenant pour cultures selon l'une quelconque des revendications 1 à 7 constitué par au moins deux bandes (1-1) et (1-2) associées par un dispositif d'association (8).

9. Bande souple d'un contenant pour cultures selon la revendication 1, comprenant une partie centrale (1c) et deux bordures latérales (la et 1b) et au moins deux raidisseurs agencés dans la largeur de la bande, de sorte qu'au moins une des extrémités de chacun desdits raidisseurs s'étende sur la bordure associée, lesdites extrémités des raidisseurs étant agencées sur des bordures opposées, ladite bande souple étant conformée en rouleau.

10. Bande souple selon la revendication 9, dans laquelle les au moins deux raidisseurs sont amovibles et engagés dans des fourreaux ménagés transversalement aux bordures dans la largeur de la bande.

11. Procédé de montage d'un contenant pour cultures selon l'une quelconque des revendications 1 à 7 dans lequel on coupe la bande souple selon l'une quelconque des revendications 9 à 10 à la longueur voulue, on lie avec un dispositif de liaison les extrémités des raidisseurs positionnées en regard l'une de l'autre sur chacune des bordures opposées de sorte à former les parois latérales du contenant et on ferme le contenant à ses deux extrémités.

## Patentansprüche

1. Behälter (A) für Kulturen, umfassend:
ein flexibles Band (1), das einen zentralen Abschnitt (1c) und zwei seitliche Ränder (la und 1b) umfasst,
mindestens zwei Versteifungen (2a, 2b), die in der Breite des Bandes so ausgebildet sind, dass sich mindestens eines der Enden (3a oder 3b) jeder der Versteifungen auf dem dazugehörigen Rand erstreckt,
mindestens eine Verbindungsvorrichtung (4) zum Verbinden von zwei Versteifungsenden, die auf gegenüberliegenden Rändern ausgebildet sind, wobei die Verbindungsvorrichtung auf diese Weise die beiden Enden aufrecht hält, sodass der zentrale Abschnitt des Bandes (1c) den Boden des Behälters und die Ränder des Bandes (la und 1b) die Seitenwände des Behälters bilden.

2. Behälter (A) für Kulturen nach Anspruch 1, wobei der Behälter an mindestens einem seiner Enden von mindestens einer Verbindungsvorrichtung zum Verbinden von zwei Versteifungsenden, die auf gegenüberliegenden Rändern ausgebildet sind, verschlossen ist, wobei die Verbindungsvorrichtung derart ausgebildet ist, dass die Enden der Versteifungen Seite an Seite liegen.

3. Behälter für Kulturen nach den Ansprüchen 1 oder 2, bei dem die Versteifungen herausnehmbar sind.

4. Behälter für Kulturen nach Anspruch 3, bei dem die Versteifungen in Hüllen (5) eingefügt sind, die quer zu den Rändern in der Breite des Bandes ausgebildet sind.

5. Behälter für Kulturen nach einem der Ansprüche 1 bis 4, bei dem die Verbindungsvorrichtung die beiden Enden der beiden getrennten Versteifungen verbindet.

6. Behälter für Kulturen nach einem der Ansprüche 1 bis 5, bei dem mindestens eines der Versteifungsenden gabelförmig ausgebildet ist.

7. Behälter für Kulturen nach einem der Ansprüche 1 bis 6, bei dem die Verbindungsvorrichtung eine Schnur mit Haltepunkten ist.

8. Behälter für Kulturen nach einem der Ansprüche 1 bis 7, der aus mindestens zwei Bändern (1-1) und (1-2) gebildet ist, die über eine Kopplungsvorrichtung (8) gekoppelt sind.

9. Flexibles Band für einen Behälter für Kulturen nach Anspruch 1, umfassend einen zentralen Abschnitt (1c) und zwei seitliche Ränder (1a und 1b) und mindestens zwei Versteifungen, die in der Breite des Bandes so ausgebildet sind, dass sich mindestens eines der Enden jeder der Versteifungen auf dem dazugehörigen Rand erstreckt, wobei die Enden der Versteifungen auf gegenüberliegenden Rändern angeordnet sind, wobei das flexible Band als Rolle ausgebildet ist.

10. Flexibles Band nach Anspruch 9, bei dem die mindestens zwei Versteifungen herausnehmbar und in Hüllen hineingesteckt sind, die quer zu den Rändern in der Breite des Bandes ausgebildet sind.

11. Verfahren zum Zusammenfügen eines Behälters für Kulturen nach einem der Ansprüche 1 bis 7, bei dem man das flexible Band gemäß einem der Ansprüche 9 bis 10 auf die gewünschte Länge schneidet, man mit der Verbindungsvorrichtung die Enden der Versteifungen, die auf jedem der gegenüberliegenden Ränder einander gegenüberliegend positioniert sind, so verbindet, dass die Seitenwände des Behälters gebildet werden, und man den Behälter an seinen beiden Enden verschließt.

## Claims

1. Container (A) for cultures, comprising:
a flexible strip (1) comprising a central portion (1c) and two side edges (1a and 1b),
at least two stiffeners (2a, 2b) arranged along the width of the strip such that at least one of the ends (3a or 3b) of each of said stiffeners extends over the associated edge,
at least one means (4) for connecting two ends of stiffeners arranged on opposite edges, the connecting means holding the two ends up such that the central portion of the strip (1c) forms the base of the container and the edges of the strip (1a and 1b) form the side walls of said container.

2. Container (A) for cultures according to claim 1, said container being closed at at least one of the ends thereof by at least one means for connecting two ends of stiffeners arranged on opposite edges, the connecting means being arranged such that the stiffener ends are side by side.

3. Container for cultures according to claim 1 or 2, wherein the stiffeners are removable.

4. Container for cultures according to claim 3, wherein the stiffeners are engaged in pockets (5) provided transversely to the edges along the width of the strip.

5. Container for cultures according to any of claims 1 to 4, wherein the connecting means connects two ends of two different stiffeners.

6. Container for cultures according to any of claims 1 to 5, wherein at least one of the stiffener ends is forked.

7. Container for cultures according to any of claims 1 to 6, wherein the connecting means is a string having fastening points.

8. Container for cultures according to any of claims 1 to 7, consisting of at least two strips (1-1) and (1-2) joined by a joining means (8).

9. Flexible strip for a container for cultures according to claim 1, comprising a central portion (1c) and two side edges (1a and 1b) and at least two stiffeners arranged along the width of the strip, such that at least one of the ends of each of said stiffeners extends over the associated edge, said stiffener ends being arranged on opposite edges, said flexible strip being rolled up.

10. Flexible strip according to claim 9, wherein the at least two stiffeners are removable and engaged in pockets provided transversely to the edges along the width of the strip.

11. Method for assembling a container for cultures according to any of claims 1 to 7, wherein the flexible strip according to any of claims 9 to 10 is cut to the desired length, the ends of the stiffeners positioned facing one another on each opposite edge are connected by a connecting means so as to form the side walls of the container, and the container is closed at the two ends thereof.
